# EUROPEAN PATENT APPLICATION

(11) **EP 4 478 240 A1**
(43) Date of publication of application: **18.12.2024**
(21) Application number: 23178746.6
(22) Date of filing: 12.06.2023
(51) Int. Cl.: G06F 40/177

(54) **METHOD AND SYSTEM FOR AUTOMATIC CELL FILLING IN A PRODUCT SPECIFICATION TABLE**

(71) Applicant: Siemens Aktiengesellschaft, 80333 München (DE)
(72) Inventor: Ringsquandl, Martin, 83064 Raubling (DE)
(74) Representative: Siemens Patent Attorneys

(57) **Abstract**

For automatic cell filling in a product specification table a generative model fills the empty cells in the table: A table embedding module (TEM) performs a mask-to-random step and encodes all cells (HC, BC) of the table into cell token embeddings (CTE), wherein the empty cells are converted into noise vectors (NV). A binary classifier receives the cell token embeddings and a constraint as input and predicts whether the table satisfies the constraint. A denoising generator (DG) receives the output of the classifier as input and denoises the cell token embeddings into denoised vectors (DV). A decoder decodes the denoised vectors into tokens, and fills the empty cells with the tokens. The generative model can generalize well to new table schemas and relieves engineers from the burden of having to manually add attribute values which are more or less obvious given the partial table and constraints, thus saving substantial expert's time. Furthermore, the model generates cell values that will most likely comply to given constraints, so constraint verification by an expert should also be much faster.

## Description

Independent of the grammatical term usage, individuals with male, female or other gender identities are included within the term.

During the design of new products, engineers must give detailed descriptions of all components that are going to be part of the new design. With this activity, engineers often spend a substantial amount of time filling out spreadsheet-like forms selecting values for attributes of components in material specifications.

Spreadsheet tools may suggest the most frequent value that was used for a certain attribute or simple correlations between numerical columns.

Nitesh V. Chawla, Kevin W. Bowyer, Lawrence O. Hall, and W. Philip Kegelmeyer, Smote: synthetic minority over-sampling technique, Journal of artificial intelligence research, 16:321-357, 2002, discloses a simple nearest neighbor-based approach that can sample new rows or fill cell values in a single table. However, this approach fails with multiple tables having different schemas.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for automatic cell filling in a product specification table, the following operations are performed by components, wherein the components are hardware components and/or software components executed by one or more processors:
- receiving, by a user interface, a table which aims to specify a product and contains empty cells, and a constraint that the product specification has to satisfy,
- generating, by a generative model, a filled table by filling the empty cells in the table, with the operations of
   - encoding, by a table embedding module performing a mask-to-random step, all cells of the table into cell token embeddings, wherein the empty cells are converted into noise vectors,
   - predicting, by a binary classifier receiving the cell token embeddings and the constraint as input, whether the table satisfies the constraint,
   - denoising, by a denoising generator receiving the output of the classifier as input, the cell token embeddings into denoised vectors,
   - decoding, by a decoder, the denoised vectors into tokens, and filling the empty cells with the tokens,
- outputting, by the user interface, the filled table.

The system for automatic cell filling in a product specification table comprises the following components, wherein the components are hardware components and/or software components executed by one or more processors:
- a user interface, configured for
   - receiving a table which aims to specify a product and contains empty cells, and a constraint that the product specification has to satisfy, and
   - outputting a filled table,
- a generative model, configured for generating the filled table by filling the empty cells in the table, wherein the generative model contains
- a table embedding module, configured for performing a mask-to-random step and for encoding all cells of the table into cell token embeddings, wherein the empty cells are converted into noise vectors,
- a binary classifier, configured for receiving the cell token embeddings and the constraint as input, and for predicting whether the table satisfies the constraint,
- a denoising generator, configured for receiving the output of the classifier as input and for denoising the cell token embeddings into denoised vectors, and
- a decoder, configured for decoding the denoised vectors into tokens, and filling the empty cells with the tokens.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, present a table generative model that provides cell filling of partially filled tables and can generalize to new table schemas.

The method and system, or at least some of their embodiments, relieve engineers from the burden of having to manually add attribute values which are more or less obvious given the partial table and constraints, thus saving substantial expert's time.

The method and system, or at least some of their embodiments, generate cell values that will most likely comply to given constraints, so constraint verification by an expert should also be much faster.

The method and system, or at least some of their embodiments, are applicable to any engineering domain with tabular datasets.

In an embodiment of the method, the decoder performs a nearest-neighbor lookup, comparing the denoised vectors with token vectors.

In another embodiment of the method, the classifier is a feed forward neural network.

In an embodiment of the method, the denoising generator is implemented using a transformer-based architecture, in particular TaBERT or TURL.

An embodiment of the method comprises the initial training of the generative model by
- retrieving training tables and corresponding training constraints from a dataset of historic product specification tables,
- iteratively performing for each pair of training table and training constraint the operations of
   - adding, by the table embedding module performing a forward noising step, noise to a subset of the cell token embeddings of the training table,
   - training the classifier to predict the training constraint from the cell token embeddings,
   - predicting, by the denoising generator, a reverse noise,
- wherein a parameter phi of the classifier is trained based on cross-entropy loss, and
- wherein a parameter theta of the denoising generator is trained based on a variational lower bound objective for probabilistic diffusion and gradients from the classifier, to push the denoised vectors towards constraint compliance.

This embodiment provides an end-to-end training procedure. The addition of the classifier allows to push generated cells towards constraint compliance.

The computer program product comprises instructions which, when the program is executed by a computer, cause the computer to carry out a method according to one of the method claims.

The provisioning device stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows a partially filled table T containing a material specification of an electrical product,
- Fig. 4: shows an example of a table T with filled cell values,
- Fig. 5: shows a generative model for cell filling,
- Fig. 6: shows an end-to-end training procedure for the generative model shown in Fig. 5,
- Fig. 7: shows a sampling procedure to generate a filled table,
- Fig. 8: shows a flowchart of a possible exemplary embodiment of a method for automatic cell filling in product specifications.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

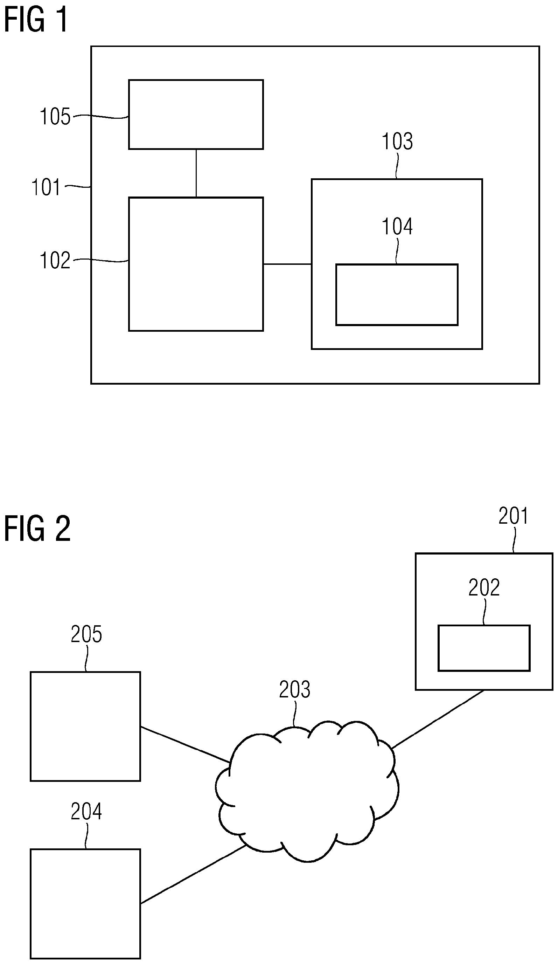

Fig. 1 shows one sample structure for computer-implementation of the invention which comprises:
- (101): computer system
- (102): processor
- (103): memory
- (104): computer program (product)
- (105): user interface

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network/Internet
- (204): computer system
- (205): mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

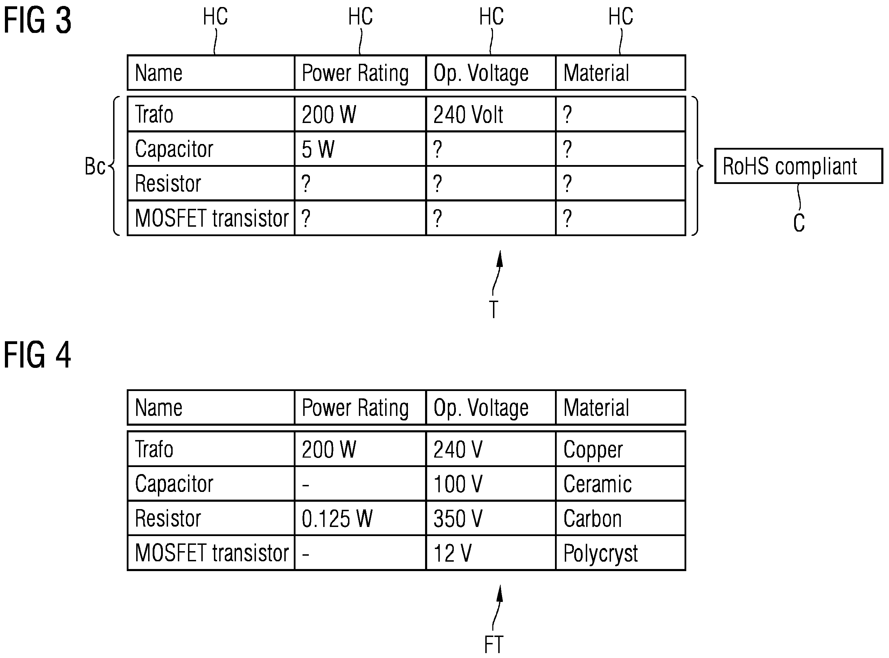

Preferably, the embodiments shown in Figs. 3 to 8 can be implemented with a structure as shown in Fig. 1 or Fig. 2.

The following embodiments each describe a system for automatic population of partially filled product specifications under constraints.

At least some of the embodiments use a generative model that can generalize to new table schemas and may be conditioned on constraints.

In Fig. 3, an example of a simple specification for an electrical product is given in the form of a table T containing four header cells HC and sixteen body cells BC. A design engineer has entered a list of components by name, and the most important attribute values for power rating and voltage of the "Trafo" component. The design engineer has also declared a high-level constraint C on the whole design, i.e., it should be compliant to the Regulations of Hazardous Materials (RoHS) standard. In cases like this, many of the missing values could be automatically filled given a few high-level constraints and historic specifications, since usually designs are not completely done from scratch, but based on previous versions or similar products.

According to embodiments described in the following, a generative design solution should automatically fill the rest of the attributes in the table T with the most probable values, thereby generating a filled table FT as shown in Fig. 4, given knowledge about similar historic specifications and constraints.

The embodiments described in the following phrase the generative design of product specifications as a generative machine learning task for tabular data, also known as cell filling.

Given a partially filled table x, the task is to model the distribution *P*(*x̂*|*c)* where *x̂* is the filled table and c is some form of constraint condition based on a dataset of historic tables D.

At least some of the embodiments described in the following include
a) a generative model for cell filling in partially filled product specification tables, and/or
b) an end-to-end training procedure

Each of these features is described in more detail below.

### Generative Model

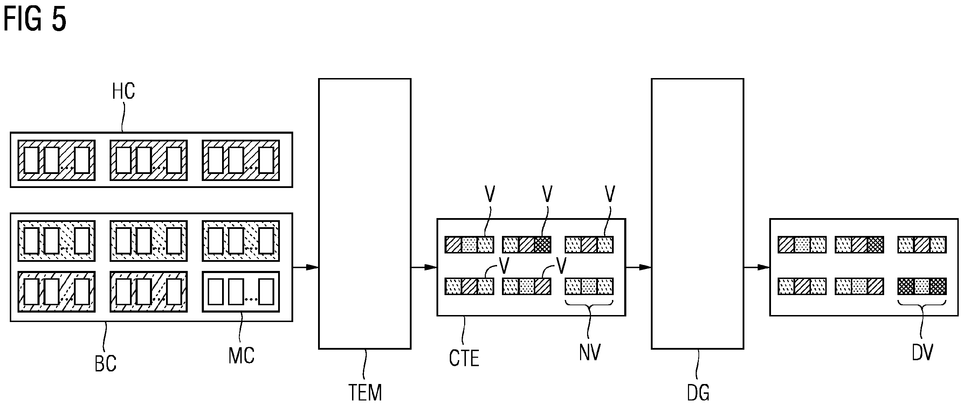

Fig. 5 shows the generative model for cell filling. It consists of a table embedding module TEM, which takes tokenized table cells (the header cells HC and the body cells BC in tokenized form) and creates cell token embeddings CTE by assigning a trainable d-dimensional vector V to every tokenized table cell. Masked cells MC (cells with unknown content) are assigned a noise vector NV from the zero-mean Gaussian, with N(0,1). The table embedding module TEM may be implemented using Transformer-based architectures, e.g., TaBERT or TURL.

Yin P., Neubig G., Yih W., Riedel S., TABERT: Pretraining for Joint Understanding of Textual and Tabular Data, ACL 2020, discloses the TaBERT transformer architecture. The entire contents of that document are incorporated herein by reference.

Deng et al., TURL: table understanding through representation learning, VLDB 2020, discloses the TURL transformer architecture. The entire contents of that document are incorporated herein by reference.

Extracting tokenized table cells from a table is state of the art. This extraction step is performed, for example, by a dedicated spreadsheet preprocessor that transforms the table into a numerical tensor representation. For example, the spreadsheet pre-processor outputs a sequence of cell tokens for each cell. Tokenization of each cell can be done in different ways, either on character-, word- or word-piece (token) level.

The second component of the generative model is a denoising generator DG, which takes the cell token embeddings CTE and transforms these vectors into new d-dimensional vectors, including denoised vectors DV for the noise vectors NV. The denoising generator DG may be implemented using Transformer-based architectures, e.g., TaBERT or TURL.

A third component of the generative model that is not shown in Fig. 5 is a classifier. The classifier receives the cell token embeddings CTE as input and predicts if the current table satisfies given constraints. In other words, the classifier is a binary classifier. It can be implemented, for example, simply as a feed forward neural network. The purpose of the classifier is to inform the denoising generator DG about the gradients regarding the cell token embeddings CTE. This means that the denoising generator DG perceives in which direction it should generate in order to fulfill the given constraints. Therefore, the denoising generator DG receives the output of the classifier as input.

### End-to-end Training Procedure

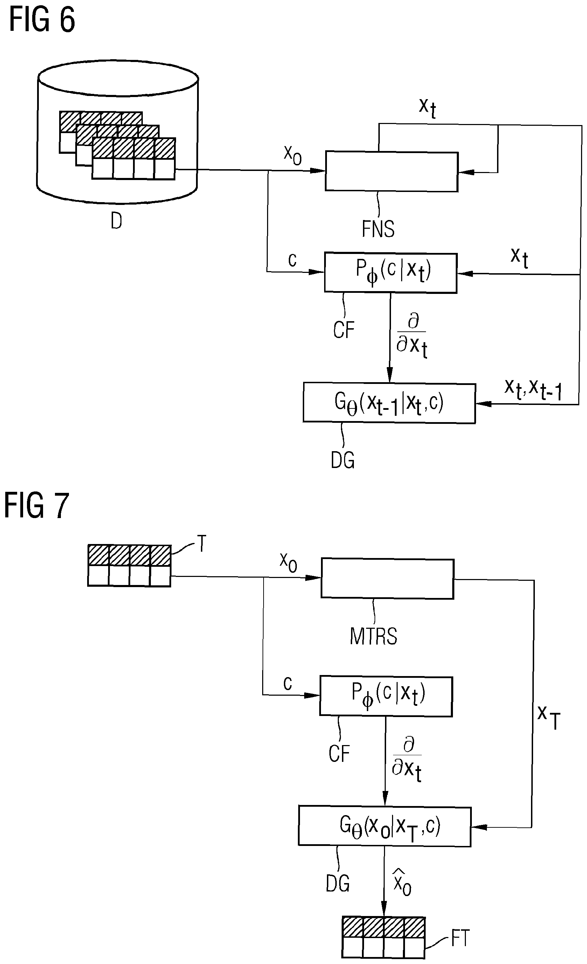

Fig. 6 shows an end-to-end training procedure for the generative model shown in Fig. 5. **x₀** represents a filled table from a dataset of historic tables **D.** In a forward noising step FNS, the table embedding module TEM shown in Fig. 5 encodes the filled table **x₀** into the cell token embeddings CTE shown in Fig. 5, which are now, in Fig. 6, denoted in bold as ***xₜ.*** The classifier CF shown in Fig. 6 is the classifier that was described above. It receives as input a constraint c as well as the cell token embeddings, now denoted as ***xₜ,*** and provides its output to the denoising generator DG.

The end-to-end training procedure works as follows:
1. The filled table ***x*₀** from the dataset of historic tables ***D*** is taken alongside its known constraint **c**
2. The forward noising step FNS iteratively adds noise to certain cell tokens until some final **T**
3. For every iteration **t** of noise:
   a. the classifier CF is trained to predict the constraint c from the cell token embeddings ***xₜ***
   b. the denoising generator DG predicts the reverse noise
4. phi is trained based on cross-entropy loss
5. theta is trained based on the variational lower bound objective for probabilistic diffusion and the gradients from the classifier CF to push the generated vectors towards constraint compliance

Jonathan Ho, Ajay Jain, Pieter Abbeel, Denoising Diffusion Probabilistic Models, NeurIPS 2020, disclose a suitable algorithm for step 5 of the end-to-end training procedure. The entire contents of that document are incorporated herein by reference.

The addition of the classifier CF to the end-to-end training procedure allows to push generated cells towards constraint compliance.

### Sampling Procedure

Fig. 7 shows a sampling procedure to generate a filled table with the deployed model.

The sampling procedure shown in Fig. 7 similarly as training starts with a single table T, but in this case, it is by nature partially filled and has unknown/masked cells. So, before denoising, the table embedding module TEM (shown in Fig. 5) swaps all masked/unknown cells for a noise vector in a mask-to-random step MTRS, outputting cell token embeddings which are denoted in bold as ***x_{T}*** in Fig. 7.

The denoising generator DG then iteratively denoises these cells until the final sample ***x*₀.** To decode the vectors into tokens, a simple nearest-neighbor lookup can be performed, i.e., take the token which's vector is closest to the generated one. The tokens are used to fill the empty cells in the table T, thereby generating a filled table FT.

Fig. 6 and 7 also show the mathematical notations of the classifier CF and the denoising generator DG. During deployment as shown in Fig. 7, the denoising generator DG receives the output of the classifier CF as input.

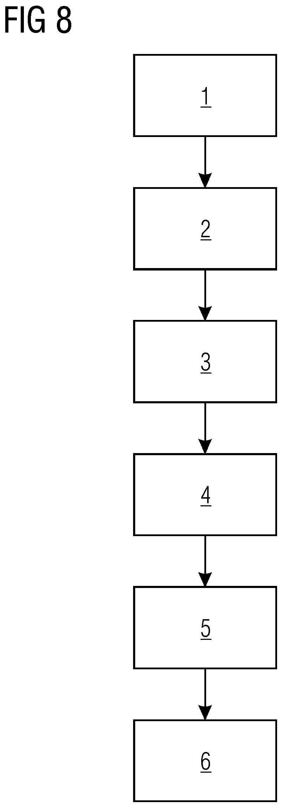

Fig. 8 shows a flowchart of a possible exemplary embodiment of a method for automatic cell filling in a product specification table, wherein the following operations are performed by components, and wherein the components are hardware components and/or software com-ponents executed by one or more processors.

In a first operation 1, a user interface receives a table which aims to specify a product and contains empty cells, and a constraint that the product specification has to satisfy.

A generative model then generates a filled table by filling the empty cells in the table with the following operations:
In a second operation 2, a table embedding module performing a mask-to-random step encodes all cells of the table into cell token embeddings, wherein the empty cells are converted into noise vectors.

In a third operation 3, a binary classifier receiving the cell token embeddings and the constraint as input, predicts whether the table satisfies the constraint.

In a fourth operation 4, a denoising generator receiving the output of the classifier as input, denoises the cell token embeddings into denoised vectors.

In a fifth operation 5, a decoder decodes the denoised vectors into tokens and fills the empty cells with the tokens.

In a final sixth operation 6, the user interface outputs the filled table.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

## Claims

1. A computer implemented method for automatic cell filling in a product specification table, wherein the following operations are performed by components, and wherein the components are hardware components and/or software components executed by one or more processors:
- receiving (1), by a user interface (105), a table (T) which aims to specify a product and contains empty cells, and a constraint (c) that the product specification has to satisfy,
- generating, by a generative model, a filled table (FT) by filling the empty cells in the table (T), with the operations of
- encoding (2), by a table embedding module (TEM) performing a mask-to-random step (MTRS), all cells of the table (T) into cell token embeddings (CTE), wherein the empty cells are converted into noise vectors (NV),
- predicting (3), by a binary classifier (CF) receiving the cell token embeddings (CTE) and the constraint (c) as input, whether the table (T) satisfies the constraint (c),
- denoising (4), by a denoising generator (DG) receiving the output of the classifier (CF) as input, the cell token embeddings (CTE) into denoised vectors (DV),
- decoding (5), by a decoder, the denoised vectors (DV) into tokens, and filling the empty cells with the tokens,
- outputting (6), by the user interface (105), the filled table (FT).

2. The method according to claim 1,
- wherein the decoder performs a nearest-neighbor lookup, comparing the denoised vectors (DV) with token vectors.

3. The method according to any of the preceding claims,
- wherein the classifier (CF) is a feed forward neural network.

4. The method according to any of the preceding claims,
- wherein the denoising generator (DG) is implemented using a transformer-based architecture, in particular TaBERT or TURL.

5. The method according to any of the preceding claims, wherein the generative model is initially trained by
- retrieving training tables and corresponding training constraints from a dataset (D) of historic product specification tables,
- iteratively performing for each pair of training table and training constraint the operations of
- adding, by the table embedding module (TEM) performing a forward noising step (FNS), noise to a subset of the cell token embeddings (CTE) of the training table,
- training the classifier (CF) to predict the training constraint from the cell token embeddings (CTE),
- predicting, by the denoising generator (DG), a reverse noise,
- wherein a parameter phi of the classifier (CF) is trained based on cross-entropy loss, and
- wherein a parameter theta of the denoising generator (DG) is trained based on a variational lower bound objective for probabilistic diffusion and gradients from the classifier (CF), to push the denoised vectors (DV) towards constraint compliance.

6. A system for automatic cell filling in a product specification table, comprising:
- a user interface (105), configured for
- receiving a table (T) which aims to specify a product and contains empty cells, and a constraint (c) that the product specification has to satisfy, and
- outputting a filled table (FT),
- a generative model, configured for generating the filled table (FT) by filling the empty cells in the table (T), wherein the generative model contains
- a table embedding module (TEM), configured for performing a mask-to-random step (MTRS) and for encoding all cells of the table (T) into cell token embeddings (CTE), wherein the empty cells are converted into noise vectors (NV),
- a binary classifier (CF), configured for receiving the cell token embeddings (CTE) and the constraint (c) as input, and for predicting whether the table (T) satisfies the constraint (c),
- a denoising generator (DG), configured for receiving the output of the classifier (CF) as input and for denoising the cell token embeddings (CTE) into denoised vectors (DV), and
- a decoder, configured for decoding the denoised vectors (DV) into tokens, and filling the empty cells with the tokens.

7. A computer program product comprising instructions which, when the program is executed by a computer, cause the computer to carry out a method according to one of the method claims.

8. A provisioning device for the computer program product according to the preceding claim, wherein the provisioning device stores and/or provides the computer program product.
